(19) Europäisches Patentamt
European Patent Office
Office européen des brevets

(11) **EP 1 691 625 B1**

(12) **EUROPEAN PATENT SPECIFICATION**

(45) Date of publication and mention of the grant of the patent:
**08.10.2008 Bulletin 2008/41**

(21) Application number: **04790521.1**

(22) Date of filing: **15.10.2004**

(51) Int Cl.:
*A23G 9/28* (2006.01)

(86) International application number:
**PCT/EP2004/011682**

(87) International publication number:
**WO 2005/053419 (16.06.2005 Gazette 2005/24)**

(54) **METHOD FOR DISPENSING A FOOD PRODUCT**

VERFAHREN ZUR ABGABE EINES LEBENSMITTELS

PROCÉDÉ DE DISTRIBUTION DE CRÈME GLACÉE

(84) Designated Contracting States:
**AT BE BG CH CY CZ DE DK EE ES FI FR GB GR HU IE IT LI LU MC NL PL PT RO SE SI SK TR**

(30) Priority: **25.11.2003 EP 03257429**

(43) Date of publication of application:
**23.08.2006 Bulletin 2006/34**

(73) Proprietors:
• **Unilever PLC**
**London**
**Greater London EC4P 4BQ (GB)**
Designated Contracting States:
**CY GB IE**
• **Unilever N.V.**
**3013 AL Rotterdam (NL)**
Designated Contracting States:
**AT BE BG CH CZ DE DK EE ES FI FR GR HU IT LI LU MC NL PL PT RO SE SI SK TR**

(72) Inventors:
• **CAMPBELL, Iain James**
**Sharnbrook, Bedford Bedfordshire MK441LQ (GB)**
• **CRILLY, James Francis**
**Sharnbrook, Bedford Bedfordshire MK441LQ (GB)**

(74) Representative: **Hugot, Alain**
**Unilever Patent Group**
**Colworth House**
**Sharnbrook**
**Bedford, MK44 1LQ (GB)**

(56) References cited:
WO-A-97/42096     US-A- 3 677 443
US-A- 4 685 597     US-A- 5 150 820
US-A- 5 492 249     US-A- 6 098 849

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical field of the invention

This invention relates to a method for dispensing a food product, see e.g. US-A-3 677 443. The invention particularly relates to a method for dispensing soft ice cream, see e.g. US-A-6 098 849.

Background

It has been proposed to dispense ice cream from large containers in individual portions by, for example, hand operation using scoops. It has also been proposed to dispense ice cream from machines as by soft serve machines in which the product is mixed, and frozen, or by dispensing machines in which pre-packaged ice cream is delivered from an ice cream container.

Conventional soft ice is dispensed from a semi-continuous, pressurised scraped surface heat exchanger (SSHE) at temperatures of -4 to -9°C. The rheology of ice cream and the shear provided by the SSHE are such that a pressure of a few atmospheres is sufficient to dispense the ice cream at an acceptable rate. Unfortunately, SSHEs are large and expensive, require power, training to operate, do not deliver consistent product quality if used over a period of time & are difficult to dismantle & clean for the operator. Each SSHE can also only offer one type of product (e.g. flavour/ice cream/sorbet etc) at a time - separate barrels are required for different products.

All these known systems are limited by one or more factors such as expensive machinery, slow rate of dispensing, narrow range of product, deterioration of bulk product not used, consistency of portion control, limited flavour selection etc.

Other, more recent dispensing systems use 'cartridges' of ice cream that must be kept at frozen temperatures (often higher than regular deep freeze temperatures of -18 to -22°C) locally separate to the dispensing system. Here the ice cream is not under pressure and therefore the volume in the cartridge is at most the volume of product dispensed, therefore systems take up a bigger footprint. Such dispensing systems are for example described in WO91/01090.

There is therefore a need for a portable business system that supplies multi-portion freshly-dispensed where no power is available locally in a compact, easy to use, hygienic system. The compressed format of the system means the capacity to deliver higher volumes of product for the same stored volume compared to other pre-frozen, aerated products.

Tests and definitions.

Average molecular weight

For the purposes of this patent, the average molecular weight for a mixture of freezing point depressants (fdps) is defined by the number average molecular weight $<M>_n$ (equation1). Where $w_i$ is the mass of species i, $M_i$ is the molar mass of species i and $N_i$ is the number of moles of species i of molar mass $M_i$.

$$< M >_n = \frac{\sum w_i}{\sum (w_i/M_i)} = \frac{\sum N_i M_i}{\sum N_i}$$

Freezing point depressants

Freezing point depressants (fpds) as defined in this invention consist in:

- monosaccharides and disaccharides
- Oligosaccharides containing from 3 to ten monosaccharide units joined in glycosidic linkage.
- Corn syrups with a dextrose equivalent (DE) of greater than 20 preferably > 40 and more preferably > 60. Corn syrups are complex multi-component sugar mixtures and the dextrose equivalent is a common industrial means of classification. Since they are complex mixtures their number average molecular weight $<M>_n$ can be calculated from the equation below. (Journal of Food Engineering, 33 (1997) 221-226)

$$DE = \underline{18016} \atop <M>_n$$

- Erythritol, arabitol, glycerol, xylitol, sorbitol, mannitol, lactitol and malitol.

Definition of overrun.

Overrun is defined by the following equation

$$OR = \frac{volume..of..ice..cream - volume..of..premix..at..ambient..temp}{volume..of..premix..at..ambient..temp} \times 100$$

It is measured at atmospheric pressure.

Brief description of the invention

It is the object of the invention to provide a method of dispensing a food product which is a frozen aerated product comprising filling a container with a food product which is a frozen aerated product, transporting the container from the site of filling to a site at which the food product is to be dispensed, locating the container in a dispensing apparatus, and discharging food product in the container through an outlet of the container, characterised in that the container has at least two compartments (A) and (B), said compartments being gas-tightly separated from each other by an at least partially movable wall, compartment (A) containing a propellant and compartment (B) containing the food product, compartment (B) being provided with a valve.

Preferably the frozen aerated product is an ice cream product.

By using pre-energised containers, it is possible to apply the method according to the invention in locations where no electrical power is available to dispense the manufacture and dispense ice cream.

According to the invention, the filling of the container takes place by introducing the propellant into compartment (A), up to where a gauge pressure of between 1 bar and 10 bar is reached, then the food product is introduced into compartment (B) until a gauge pressure of between 5 bar and 12 bar, preferably above 8 bar, is reached.

Preferably also, the ice cream product contains freezing point depressants in an amount of between 20% and 40% w/w, preferably above 25%, and between 0% and 15% fat, preferably between 2% and 12%, the freezing point depressants having a number average molecular weight $<M>_n$ following the following condition:

$$<M>_n =< -8\ FAT + 330$$

wherein FAT is the fat level in percent by weight of the product.

More preferably, the freezing point depressants are made at least a level of 98% (w/w) of mono, di and oligosaccharides.

More preferably also, the dispensing apparatus is equipped with thermal insulation means which surrounds each ice cream container and which maintains product temperature below -15°C for up to 8 hours. It allows for locating the dispensing apparatus in places wherein no electrical power is available to maintain the temperature of the ice cream product. In an alternative preferred embodiment, the dispensing apparatus is equipped with an insulated casing for example made of insulating foam, or comprising insulating foam panels and the ice cream containers are partially covered by a generally cylindrical casing made of eutectic plates.

Preferably, the dispensing apparatus is designed to releasably hold one or more containers vertically inverted (i.e. with the valve at the bottom). More preferably, the dispensing apparatus is equipped with a storage cabinet adapted to contain additional filled containers.

Detailed description of the invention

The present invention will be further described with reference to the drawings wherein;

Figure 1 is a schematic view of a dispensing unit for operating the process of the invention.

Figure 2 is a schematic partial view of the upper part of a dispensing unit for operating the process of the invention, together with an ice cream container about to be introduces into the dispensing unit.

Figure 3 is a schematic cross section of an ice cream container used in the process of the invention.

Figure 4 is a schematic cross section of another ice cream container used in the process of the invention.

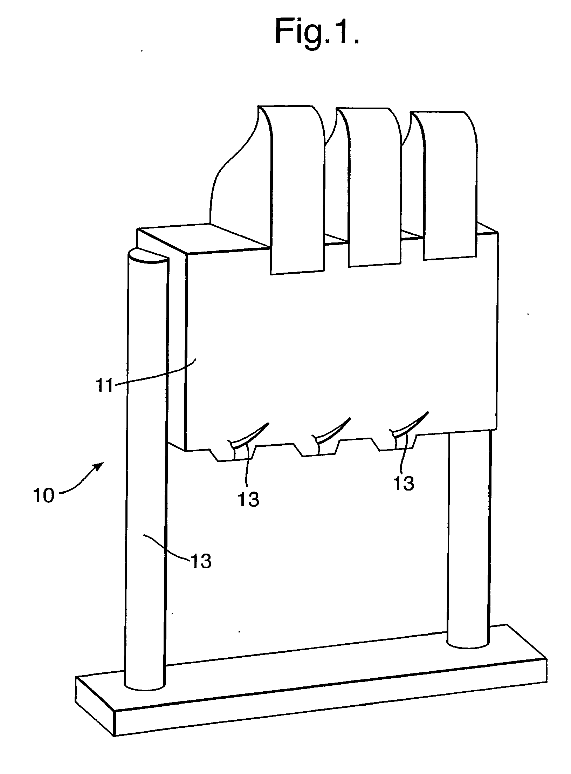

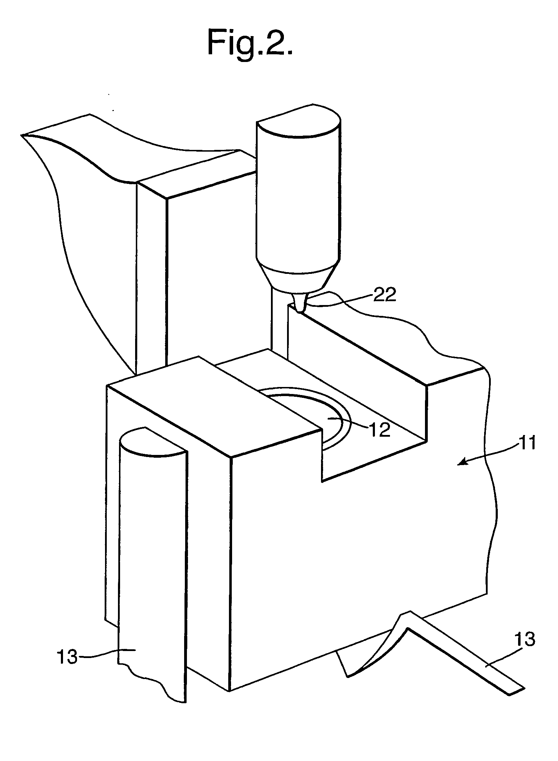

As can be seen on figures 1 and 2, a dispensing unit 10 comprises an upper part 11 adapted to vertically hold individual ice cream containers 20 in wells 12, these wells can be thermally insulated. This upper part 11 is supported by a frame 13 which is adapted to be fitted on existing tables or countertops. These insulated wells 12 can be in the form of a generally cylindrical envelope preferably containing a eutectic solution. At the bottom of the upper part 11 is located, under each insulated well 12, actuating means 13 adapted to open and shut the valve 22 of the ice cream container 20 container in said well 12.

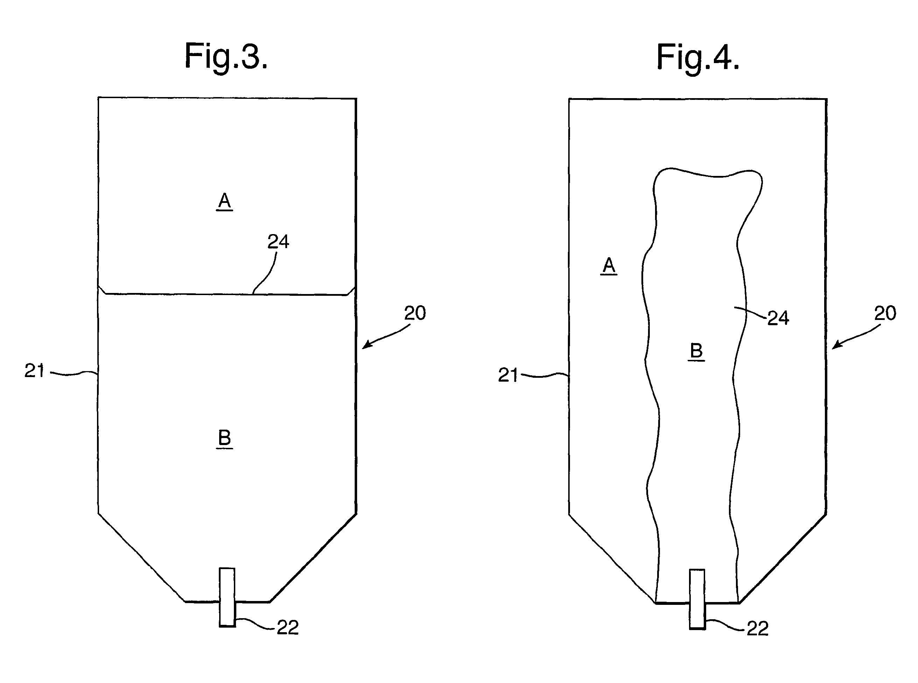

As can be seen on Figure 3, each ice cream container 20 comprises an outer body 21 of generally cylindrical shape, equipped with a dispensing valve 22 at one end. The outer body 21 is divided in two compartments A and B said compartments being gas-tightly separated from each other by an at least partially movable wall 24, compartment (A) containing a gas under pressure (propellant) and compartment (B) containing the ice cream product, compartment (B) being provided with a valve 22. As can be seen in Figure 3, the movable wall 24 is in the form of a piston sliding against the inside wall of the cylindrical body 21, in another embodiment disclosed in Figure 4, the movable wall 24 can be in the form of a bag 25 attached to the valve 22.

The gas in compartment (A) can be air, it is typically at a gauge pressure of between 5 bar and 12 bar at a temperature of -18 C.

A container 20 can present on its outer body 21, a thermal insulation which can be in the form of eutectic pads forming a generally cylindrical envelope. Each container contains enough ice cream to typically dispense around 10 individual doses.

In operation, ice cream containers 20, filled with different flavoured ice creams, are inserted in their respective wells 12 in the dispensing apparatus 10. On request by a customer, or by the customer himself, the actuating means 13 corresponding to the desired ice cream are operated, the valve 22 is opened and, owing to the pressure in compartment A of the container, the ice cream contains in compartment be flows out of the container through valve 22 into e.g. a cup or a cone. When the desired dose has been delivered, valve 22 is shut.

**Claims**

1. A method of dispensing a food product which is a frozen aerated product comprising
   filling a container with a food product which is a frozen aerated product,
   transporting the container from the site of filling to a site at which the food product is to be dispensed,
   locating the container in a dispensing apparatus, and
   discharging food product in the container through an outlet of the container,
   wherein the container has at least two compartments (A) and (B), said compartments being gastighlty separated from each other by an at least partially movable wall, compartment (A) containing a propellant and compartment (B) containing the food product, compartment (B) being provided with a valve,
   **characterised in that** the filling of the container takes place by introducing the propellant into compartment (A), up to where a gauge pressure of between 1 bar and 10 bar is reached, then the food product is introduced into compartment (B) until a gauge pressure of between 5 bar and 12 bar, preferably above 8 bar, is reached.

2. A method according to claim 1 wherein the food product is an ice cream product containing freezing point depressants in an amount of between 20% and 40% w/w, preferably above 25%, and between 0% and 15% fat, preferably between 2% and 12%, the freezing point depressants having a number average molecular weight $\langle M \rangle_n$ following the following condition:

$$<M>_n =< -8\ FAT\ +330$$

Wherein FAT is the fat level in percent by weight of the product.

3. Method to claim 2 wherein the freezing point depressants are made at least a level of 98% (w/w) of mono, di and oligosaccharides.

**Patentansprüche**

1. Verfahren zur Abgabe eines Lebensmittelprodukts, das ein gefrorenes, belüftetes Produkt darstellt, umfassend Befüllen eines Behälters mit einem Lebensmittelprodukt, das ein gefrorenes, belüftetes Produkt darstellt, Transportieren des Behälters von der Stelle des Befüllens zu einer Stelle, an der das Lebensmittelprodukt abgegeben werden soll,
Lokalisieren des Behälters in einer Abgabeapparatur und
Austragen des sich in dem Behälter befindenden Lebensmittelprodukts durch eine Auslassöffnung des Behälters, wobei der Behälter wenigstens zwei Kammern (A) und (B) aufweist, die Kammern gasdicht durch mindestens eine teilweise bewegliche Wand voneinander getrennt sind, die Kammer (A) ein Treibmittel und die Kammer (B) das Lebensmittelprodukt enthält, die Kammer (B) mit einem Ventil versehen ist,
**dadurch gekennzeichnet, dass** das Befüllen des Behälters durch Einführen des Treibmittels in die Kammer (A) bis zu dem Punkt erfolgt, bei dem ein Manometerdruck zwischen 1 bar und 10 bar erreicht ist, darauf das Lebensmittelprodukt in Kammer (B) eingeführt wird, bis ein Manometerdruck zwischen 5 bar und 12 bar, vorzugsweise von über 8 bar, erreicht ist.

2. Verfahren nach Anspruch 1, wobei das Lebensmittelprodukt ein Eiscremeprodukt ist, das den Gefrierpunkt senkende Mittel in einer Menge von zwischen 20 % und 40 % G/G, vorzugsweise von über 25 %, und zwischen 0 % und 15 % Fett, vorzugsweise zwischen 2 % und 12 %, enthält, wobei die den Gefrierpunkt senkenden Mittel ein zahlengemitteltes Molekulargewicht $<M>_n$ entsprechend der folgenden Bedingung aufweisen:

$$<M>_n = < -8\ FETT + 330,$$

worin FETT die Fettkonzentration des Produkts in Gewichtsprozent ist.

3. Verfahren nach Anspruch 2, wobei die den Gefrierpunkt senkenden Mittel aus Mono-, Di- und Oligosacchariden zumindest in einer Konzentration von 98 % (G/G) bestehen.

**Revendications**

1. Procédé de distribution d'un produit alimentaire qui est un produit aéré congelé comprenant

   ♦ le remplissage d'un récipient avec un produit alimentaire qui est un produit aéré congelé,
   ♦ le transport du récipient du site de remplissage vers un site où le produit alimentaire doit être distribué,
   ♦ le placement du récipient dans un appareil de distribution, et
   ♦ le déversement du produit alimentaire dans le récipient par un orifice de sortie du récipient,

dans lequel le récipient possède au moins deux compartiments (A) et (B), lesdits compartiments étant séparés de manière étanche aux gaz l'un de l'autre par une paroi partiellement mobile, le compartiment (A) contenant un gaz propulseur et le compartiment (B) contenant le produit alimentaire, le compartiment (B) étant équipé d'une valve, **caractérisé en ce que** le remplissage du récipient a lieu par l'introduction du gaz propulseur dans le compartiment (A), jusqu'à ce qu'une pression manométrique comprise entre 1 bar et 10 bar soit atteinte, puis le produit alimentaire est introduit dans le compartiment (B) jusqu'à ce qu'une pression manométrique comprise entre 5 bar et 12 bar, de préférence supérieure à 8 bar, soit atteinte.

2. Procédé selon la revendication 1, dans lequel le produit alimentaire est une crème glacée contenant des agents de réduction du point de congélation en une quantité comprise entre 20 % et 40 % en poids, de préférence supérieure à 25 %, et entre 0 % et 15 % de matière grasse, de préférence entre 2 % et 12 %, les agents de réduction du point de congélation ayant un poids moléculaire moyen en nombre $\langle M \rangle_n$ selon la formule suivante :

$$\langle M \rangle_n \ =\ < \ -8 \ FAT \ +330$$

où FAT est la teneur en matière grasse en pourcentage en poids du produit.

3. Procédé selon la revendication 2, dans lequel les agents de réduction du point de congélation sont constitués d'au moins une teneur de 98 % (en poids) de mono-, di- et oligosaccharides.

# Fig.1.

11

10

13

13

13

# Fig.2.

# Fig.3.

A

24

20

21

B

22

# Fig.4.

A

B

24

20

21

22

EP 1 691 625 B1

**EP 1 691 625 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3677443 A
- US 6098849 A

- WO 9101090 A

**Non-patent literature cited in the description**

- *Journal of Food Engineering,* 1997, vol. 33, 221-226